# EUROPEAN PATENT APPLICATION

(11) **EP 1 398 716 A2**
(43) Date of publication of application: **17.03.2004**
(21) Application number: 02027285.2
(22) Date of filing: 06.12.2002
(51) Int. Cl.: G06F 17/60

(54) **System and method for distributing and redeeming selected coupons**

(30) Priority: 13.09.2002 US 243770
(71) Applicant: NCH Marketing Services, Inc., Lincolnshire, Illinois 60069 (US)
(72) Inventor: Marshall, Robert, Las Cruces, New Mexico 88991 (US)
(74) Representative: Becker Kurig Straus

(57) **Abstract**

A closed loop system for distributing and redeeming coupons ordered by a customer including a coupon distribution center for distributing the coupons and a redemption center for redeeming the coupons distributed by the coupon distribution center. A controller is operatively connected to the coupon distribution center and the redemption center for providing a closed loop, real time interconnection between the distribution center and the redemption center and associated components such as databases and production aids. This modular integration and hard linkage of the intrinsic functions involved in executing promotions, permits total control of a coupon offer program from birth to expiration. The distribution center interfaces directly with the consumer, presents coupon offerings in a text list for rapid access, permits easy coupon selection, enables the user to chose the preferred delivery method and selection of coupon type and delivery destination. Since coupons are only selected by the customer, and the coupon offer list contain text only, customer interface is easy and rapid, and can be readily accessed with a PDA, a cellular phone, laptop, or desktop PC.

## Description

### BACKGROUND OF THE INVENTION

The use of manufacturer discount coupons for promoting the sale of consumer goods is a widespread practice, especially in the United States. This promotional technique (which has been pioneered by multinational packaged goods companies) is also being rapidly adopted in virtually all free market economies. Although volumes are significantly lower, coupon discounting is well established in such countries as Canada, the United Kingdom, Italy, France and Spain. Coupon distribution programs are also being developed throughout the world as a global economy emerges based upon competitive market practices.

After many years of operation, the domestic coupon promotional process, in particular, has become refined and relatively efficient. It provides very positive benefits to manufacturers, retailers and consumers alike. A well developed infrastructure has evolved in the United States and Western Europe that can handle the clearing of huge quantities of individual consumer paper coupon transactions, and reconcile the complex financial settlement requirements that occur between retailers and manufacturers. Significant progress has also been made in deploying fairly sophisticated analysis and reporting systems that extract exacting marketing information from the mass of data captured.

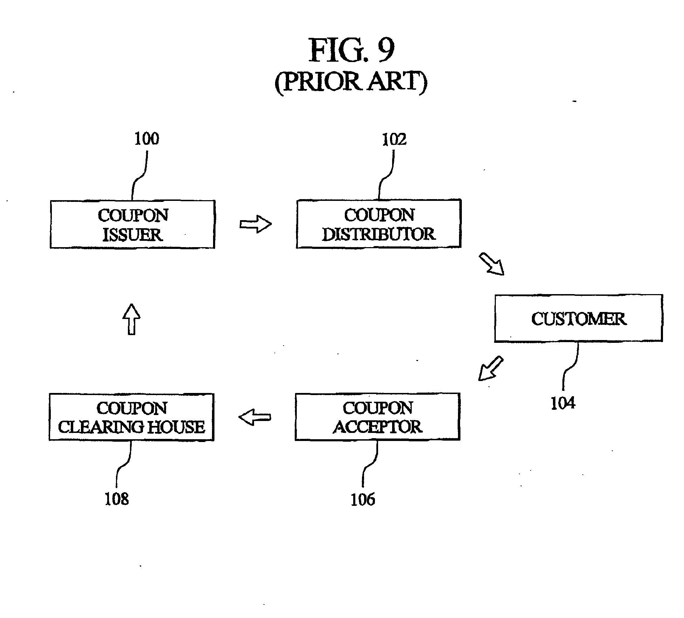

Figure 9 generally illustrates one known coupon processing system as typically employed in the United States. Coupon processing begins with a coupon issuer 100, most usually a packaged goods manufacturer such as Kellogg, Kraft or Heinz, specifying a coupon promotion and subsequently authorizing a distributor 102, such as Valassis, Newscorp or Advo to design, produce and distribute paper coupons to customers or consumers 104. Customers or consumers bring these coupons to an acceptor 106 which is typically a grocery or drug retail chain store such as Kroger, WalMart or Walgreens, on a regular shopping trip. The coupons are honored by the acceptor 106, who after verifying the promotion terms and conditions, and checking that the correct product is being purchased, awards a monetary discount to the customer 104.

The coupon acceptor 106 collects all of the redeemed coupons and periodically ships them to a coupon clearinghouse 108 such as NCH, IDI or Carolina. An invoice, that includes the total of the coupon face values and the total of industry-approved handling allowances, accompanies each coupon shipment. The coupon clearinghouse 108 sorts, processes and verifies the coupons received from the coupon acceptor 106-Most coupons carry core information about the product and the amount of the discount in bar codes formatted according to approved industry standards. The codes on each coupon generally identify the issuing manufacturer, a product family, and the value of the discount. Most coupons also carry an appendix bar code that codifies or contains a promotion identifier referred to as the coupon offer code. In some promotions, an appendix bar code (EAN Extension) is used to carry additional information such as the offer expiration date, household identification, etc. The coupons are scanned at the clearinghouse and validated against authentication codes previously established by the coupon issuer 100. After the coupon processing is completed, the clearinghouse 108 reimburses the acceptor 106 for money advanced, and forwards the coupons and associated billing invoices to the coupon issuer 100 or its agents.

The coupon issuer 100 or its agent verifies that the amount due to the coupon acceptor 106 is substantially accurate and that the coupon shipment is substantially free of mal-redemption (i.e., the submitted coupons were properly accepted and used to purchase valid products). Also, the data captured by the clearinghouse 108 from the coupons is analyzed and used to generate reports relating to the performance of the coupon promotion to assist the coupon issuer 100 in managing present and future coupon promotions.

In the United States, freestanding inserts are the dominant distribution vehicle. Distribution companies that have industry wide promotion skills and highly developed publishing capabilities, issue booklets containing advertisements and discount coupons that are inserted into newspapers. Direct mail is also a significant distribution vehicle worldwide, particularly outside of the United States.

In general, the paper coupon industry operates on the basis of dedicated distributors and distinctly separate unassociated redemption providers. This lack of linkage increases the security risk and adds an uncertainty to the accuracy of coupon promotion perfonnance reports. Moreover, these common distribution media used by the distributors have become less effective and more prone to abuse as distribution volumes have increased dramatically. For example, in the mid-nineties, the annual coupon distributions of paper coupons exceeded 200 billion in the United States alone, but only about 5 billion coupons were redeemed for purchase of the featured products. During this period, many instances of mal-redemption were uncovered by postal inspectors and Industry Groups causing issuing manufacturers to initiate even more stricter redemption policies. The redemption rate for freestanding inserts, which account for more than 90% of distributed volume, fell below 1.5% in 2001. The excess volume, lack of targeting of freestanding inserts towards likely users, and shortened expiration dates are considered to be major factors in deteriorating redemption rates.

Therefore, there is a need for a radically improved coupon distribution and processing system that rigidly links coupon distribution and redemption processes, that facilities targeting to most likely users, minimizes the chances of financial malfeasance, controls liabilities on unredeemed coupons, and provides more accurate performance accounting so that subsequent promotions can be optimized. There is also a further need to automate and integrate the distribution and redemption processes so that the promotions are more efficient and cost effective.

### SUMMARY OF THE INVENTION

The present invention relates to a system for distributing and redeeming coupons specifically ordered by a customer. The invention also facilitates the inclusion in the order of extra coupons that are considered to be of interest as determined from pertinent information in a customer database.

One embodiment of the present invention generally includes a coupon distribution center for distributing the coupons, and a redemption center for redeeming the coupons distributed by the coupon distribution center. The redemption center communicates with the coupon distribution center to receive from the coupon distribution center data associated with the coupons distributed by the coupon distribution center to consumers or customers. The redemption center also transmits to the distribution center data relating to the coupons distributed by the distribution center, which are redeemed by the redemption center. As such, the present system provides a closed-loop processing of the coupons to better track and collect real-time information about coupon ordering, distribution, use and redemption.

In one embodiment of the present invention, the system for distributing and redeeming coupons ordered by a customer includes a central processor that communicates between issuing manufacturers and a coupon distribution center that is tightly linked to a coupon redemption center and that operates in real time. Based on input from the issuing manufacturer, the distribution center communicates or relays details on specific promotions such as drop and expiration dates, volume distribution, face value, offer code and other special conditions, directly to the redemption center. The redemption center, in turn feeds back ongoing redemption data detailing financial transactions in the active promotions, offer codes captured, and summaries that form the basis for tracking and measuring the performance of individual promotions.

In one embodiment, the system for distributing and redeeming coupons ordered by a customer includes the central processor in communication with a coupon issuer having capability for automatically creating artwork and copy for actual production of the coupons, and automatically creating a descriptive text overview that serves as a presentation menu of offers to the customer- As coupons are ordered, the central processor instructs the distribution or delivery center to send coupons to the destination assigned by the customer.

In one embodiment of the present invention, the system for distributing and redeeming coupons is adapted or operable to receive orders for coupons directly from customers via an electronic data network, such as the Internet. The system includes a display such as an electronic monitor and processor such as a personal computer that presents a gamut of coupon offers that are actively available for selection. The monitor and local processor are directly connected to or in communication with the distribution center via the data network, such as the Internet. The distribution center presents coupon offers to a viewer, accepts coupon orders from the user, creates the ordered coupons which are preferably encoded with information identifying the requester, reviews the customer database, determines whether other coupons would be suitable for supplementing the order, and arranges for dispatch of the coupons. simultaneously, the redemption center is actively clearing all coupons that have been used by the mass of customers and issued from the distribution center. All pertinent redemption information is analyzed and reported to the issuing manufacturer, and requester redemption datum is added to the customer database.

In one embodiment of the present system, coupons offered to the customers are not printed until the customer orders the coupons and selects a distribution channel and destination address. The printed coupons are sent to customers through one or more various channels including, for example, mailing, landline or wireless transmission to a remote printer, or via the Internet to a smart card writer. Printing and distributing coupons to customers based on an order received for the coupon from the customer significantly reduces coupon distribution costs and increases the likelihood that the customer will redeem such coupons. The present invention also facilitates the determination of supplemental coupons to send to the customer along with the coupons ordered by the customer, based on data relating to the customer profile stored in a database.

The present invention further includes a method for distributing and redeeming coupons ordered by a customer. The steps of this method in one embodiment include distributing coupons to customers from a distribution center and sending data associated with the coupons distributed by the coupon distribution center to a redemption center. At the redemption center, the coupons distributed by the coupon distribution center are redeemed when the coupons are presented, and data relating to the coupons redeemed by the redemption center is transmitted to the coupon distribution center for analysis.

It is therefore an advantage of the present invention to provide a coupon processing system that employs a data network, such as the Internet, for presenting coupon selections and accepting coupon orders from customers.

Another advantage of the present invention is that coupon presentations can be in text form only, thus minimizing the extensive delays encountered in downloading graphic coupon images.

Another advantage of the present invention is that coupons are selected, but not produced on a local computer. This avoids long print times and eliminates the poor esthetic quality, visual variability and unreadable bar codes that frequently occur due to the low quality and variable performance of common consumer printers.

Another advantage of the present invention is that it enables a customer to choose the particular channel for delivery of the selected coupons. This obviously increases the chances that the coupon will be used and eventually increases the success of a promotion.

Another advantage of the present invention is that the coupons can be delivered to a particular store of choice either by mail or by electronic transmission and printing within the store. This substantially increases the chance of redemption since the coupon is on hand in the store and close to where the products of interest are displayed.

Another advantage of the present invention is that the customer with a network access device, such as a PDA, cellular phone, laptop or desktop computer, can rapidly access the system since coupon presentation is in text format with minimal download times.

Another advantage of the present invention is to provide a closed-loop coupon processing system in which data relating to distributed coupons is immediately communicated between a coupon distribution center and a coupon redemption center in real time.

A further advantage of the present invention is to provide a coupon processing system, which is operable to deliver coupons to customers through multiple, and customer selectable delivery channels.

A further advantage of the present invention is to provide a coupon processing system that delivers coupons to select consumers to reduce excess printing of coupons. Large print runs are not only expensive, but become a potential reservoir of coupons for sourcing mal-redemption scams.

A further advantage of the present invention is to provide a coupon processing system that reduces promotion lead times and production costs by originating coupon artwork and copy in electronic format with graphics art aids, and by using issuing manufacturer memory caches holding universal image content such as logos, brand images, border formats and terms of use.

A further advantage of the present invention is that it speeds a marketer's response time in modifying ongoing promotions to counter recent competitor activities.

A further advantage of the present invention is that the closed loop operation and enhanced response time result in an ideal test system for optimizing promotion variables. Small test drops can be executed having different promotion characteristics such that actual, high volume promotion is optimized.

A further advantage of the present invention is to provide a coupon processing system that enables coupon issuer criteria defining redemption conditions to be rapidly downloaded to a coupon redemption center and enacted immediately.

A further advantage of the present invention is to provide a coupon processing system which is highly interactive in paying retailers, billing manufacturers, and continually updating the manufacturer, retailer and consumer databases.

A further advantage of the present invention is to provide a coupon processing system in which coupons are printed in a controlled environment on a high quality, high resolution printer. Such coupons have esthetic appeal for the consumer and precision bar codes that can be easily scanned to simplify the acceptance and clearing processes.

A further advantage of the present invention is to provide a coupon processing system which issues coupons that are identical in size and appearance for a particular offer to avoid concerns of authenticity when the coupons are presented for redemption.

A further advantage of the present invention is to provide a coupon processing system that issues coupons having highly scannable bar codes.

A further advantage of the present invention is to provide a coupon processing system which issues coupons that have fixed and unalterable terms and conditions not prone to alteration.

A further advantage of the present invention is to provide the coupon requester with options on how coupons are to be delivered.

A further advantage of the present invention is to provide the coupon requester with options on what type of coupon, paper or electronic is preferred and what destination the coupons are to be delivered.

Additional features and advantages of the present invention are described in and will be apparent from, the following Detailed Description of the Invention and the figures.

### BRIEF DESCRIPTION OF THE FIGURES

Fig. 1 is a block diagram illustrating a coupon distribution and redemption system in accordance with one embodiment of the present invention.
Fig. 2 is a block diagram illustrating the components of the distribution and redemption control center shown in Fig. 1 in accordance with one embodiment of the present invention.
Fig. 3 is a block diagram illustrating the components of the distribution center of the distribution and redemption control center shown in Fig. 2, and the distribution center's connection with a customer and a coupon issuer.
Fig. 4A is an illustration of a sample coupon offer list for presentation on an Internet monitor as created by the distribution processor of the distribution center shown in Fig. 3.
Fig. 4B is an illustration of an example of an original artwork and copy master, also created by the distribution processor, for printing esthetic graphics composition coupons.
Figs. 5A and 5B are block diagrams illustrating components of the coupon distribution center shown in Fig. 3 that are involved in preprinting coupons for delivery to a customer.
Fig. 6 is a flowchart illustrating a method for distributing preprinted coupons upon receipt of an order from a customer.
Figs. 7A and 7B are flowcharts illustrating a method for preparing and delivering coupons upon receipt of an Internet order from a customer.
Fig. 8 is an illustration of an example of a coupon page prepared for sending to a customer, including customer ordered coupons and supplemental filler coupons.
Fig. 9 is a block diagram illustrating a prior art coupon distribution and redemption system.

### DETAILED DESCRIPTION OF THE INVENTION

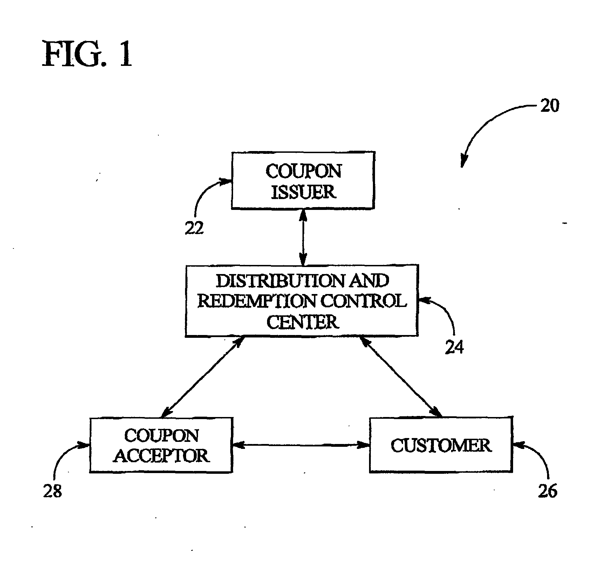

Turning now to FIG. 1, the system for processing coupons in accordance with one embodiment of the present invention is generally indicated by numeral 20, and includes a coupon issuer 22, a distribution and redemption control center or system 24, a user or customer 26 and a coupon acceptor 28. In operation, when the coupon issuer 22, typically a product manufacturer or a service provider, commits to a promotional campaign that includes one or a series of discount coupons, the necessary specifications including artwork, offer terms, release dates, etc., are relayed to control center 24. The control center 24 manages all functions in presentation and selection of coupons to the customer, as well as the production, delivery and all functions involved in the redemption of such coupons.

When the customer 26 orders the coupons from the control center 24, the control center sends the coupons to the customer 26 by the selected delivery method such as mail or electronic transmission, as further discussed below. The coupon package is delivered to a specific destination chosen by the customer. The coupons preferably include a code that specifically identifies the requester, customer or customer household that ordered the coupon. The coupon acceptor 28 grants a discount to the customer 26 when a purchase is made that fully complies with the terms and conditions of the tendered coupon. The coupon acceptor 28 then transfers the coupons, along with an invoice summarizing advanced moneys, to the control center 24. The control center or system 24 then validates and analyzes each coupon and extracts data critical to satisfying financial settlement requirements and the eventual compilation of promotion performance statistics that may include specific customer use information or data.

The control center 24 forwards the coupon data, coupons if required, and billing invoices, to the coupon issuer 22 or designated agent, for independent evaluation in order to further audit payment legitimacy and capture deeper marketing information, such as the redeeming customer identification. The control center 24 also updates new activity to related databases that are structured for easy access to promotion tracking, promotion performance analysis and micro/macro reports concentrated on promotion variables, for example. The coupon issuer 22 (or its agent) subsequently reimburses the control center 24 for payments made to the coupon acceptor 28. A processing fee is typically also added for services performed in clearing the coupons.

The coupons are usually stored for a period of time to permit subsequent audits that may arise due to special situations, or for general monitoring requirements necessary to ensure the integrity of the redemption process. After a designated storage period, the coupons are destroyed, for example, by shredding or pulverization to avoid possible re-circulation.

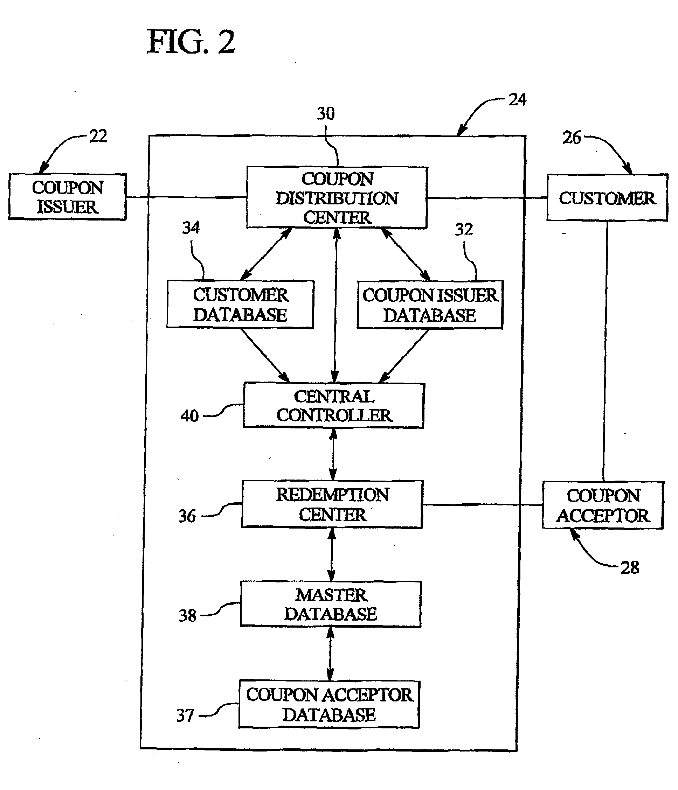

Turning now to FIG. 2, the distribution and redemption control center or system 24 includes a coupon distribution center 30 in direct communication with the coupon issuer 22 via the Internet or other suitable data network, to coordinate offer planning, coupon graphics designing, bar code composition and general terms and conditions, etc., necessary for initializing coupon promotions. All details of the distribution transaction information are stored in a coupon issuer database 32 and a customer database 34 in the control center or system 24. The issuer database 32 contains details such as product promoted, promotion offer code, value of the discount, limits to distribution volume, release date, expiration date, etc. The customer database 34 stores information such as customer identification, household demographic information, e-mail address, regular and/or mailing address, coupon order history, selected delivery channel, chosen delivery destination, etc.

The distribution and redemption control center 24 and redemption center 36 are directly linked via a data network (and central controller 40) such that there is also direct communication between the coupon issuer 22 and the distribution center 30. This arrangement enables the coupon issuer's criteria concerning acceptance of coupons to be rapidly downloaded in real time to the redemption center 36 and enacted immediately. This could include such information as geographic area acceptance, where regional manufacturers do not sell the product, lists of retailers who do not stock the product, and retailers who are suspected of mishandling coupons, for example.

Furthermore, as soon as a particular coupon offer or promotion is to be released, the distribution center 30 can immediately relay to the redemption center 36, for validation purposes, all the terms and conditions applicable to the offer. This data transfer is essential since in most cases some terms and conditions are not implicit in the bar code of the coupons. This occurs, for example, with free product or variable value coupons where the manufacturer must set limits according to the product price differences at different retailers. Also, most coupons do not carry codes specifying the expiration date of the offer. Furthermore, sweepstakes coupons, in which the customer enters a written name and address, must be flagged, saved and forwarded for subsequent processing. In such cases, the distribution center 30 sets data capture flags on these special offers that the redemption center 36 converts to save interrupts and that prompt an operator to separate such coupons as they occur in normal handling.

At the transaction stage, i.e., when the coupon acceptor 28 transfers the coupons to the control center 24, the redemption center 36 verifies the acceptor's 28 identity, captures coupon data by scanning or manual means, reimburses the acceptor 28 and bills the coupon issuer 22 for the outstanding balance. These transactions are then communicated in real time or when convenient to the distribution center 30, and to the coupon issuer 22 via the distribution center.

The redemption center 36 continually updates the customer database 34 that is addressed by the distribution center 30 when coupons are ordered and redeemed by the customer 26. This redemption history may be subsequently used for such purposes as, issuing additional coupons that are likely to appeal to the customer 26 according to prior use criteria or issuing coupons at a higher face value than offered to add additional incentive to use the coupon and purchase the product. Likewise, it may be used as an issuance control tool if, for example, the customer 26 has used too many coupons within a specified time period. In one preferred embodiment, the redemption center 36 also uses both computerized and manual shipment normality sensing tools to ensure that individual stores and retailer chains are redeeming coupons properly.

It should be appreciated that the redemption center 36 communicates with the distribution center 30 and the customer database 34 in real time. As such, the redemption center 36 provides early alerts on problems with the promotion mechanics, thus facilitating early corrections. Problems such as missing or non-scannable bar codes, bar code errors, terms ambiguities or complex offers, like cross product purchases or buy two get one free, etc., cause significant aggravation to the customers 26 and the coupon acceptors 28, and need rapid resolution. The closed loop operation and speed of response of the system help resolve such problems in a timely and efficient manner. This closed loop operation of the present invention where the distribution and redemption elements are tightly linked, also serves as an ideal testing system where promotion variables can be readily changed and wherein the results can be used to determine optimal characteristics or terms for the promotion. For example, if a coupon promotion for a seventy-five cent discount is not promoting the product as well as desired, as indicated from the results of a low volume test, the discount could be increased to a dollar before committing to a high volume distribution without having to reprint or reissue the entire batch of coupons. Any subsequent customers ordering that coupon would receive the modified promotion since such modifications would also have been made to the offer presentation list.

In one embodiment of the present invention, a coupon acceptor database 37 is included for storing data relating to the coupon acceptors 28. The coupon acceptor database 37 is preferably updated in real time to enable the redemption center 36 to be highly interactive in paying the coupon acceptors 28 and reporting on the status of their accounts receivable. This database also carries basic information such as store name and address, Dun and Bradstreet business profile, TIN number and any other suitable information pertinent to verifying the acceptor legitimacy.

In one embodiment, the distribution and redemption control center 24 also includes a master database 38 for storing data created from transaction activities performed at the issuance of coupons by the distribution center 30 and the acceptance of the coupons from the coupon acceptor 28 by the redemption center 36. This database contains all history detailing the financial transactions with the thousands of acceptors and the history of the numerous promotions run by more than several thousand known coupon issuers. Relational databasing facilitates recasting and analysis of the data to generate a broad range of financial and promotion performance reports that can be customized to particular issuer and acceptor requirements. The master database 38 also serves as the core reference for a forecasting engine that can estimate the performance of a promotion prior to release, and as a repository of valuable information for macro reporting on coupon promotions by such determinants as product/service category, geographic regions, face value, expiration date, household characterization, etc.

As indicated above, the control center 24 includes a central controller 40 that administrates and manages all the components within the closed loop system of the control center. In particular, the central controller 40 structures and stores all relevant information generated by the distribution center 30 and the redemption center 36 to the appropriate databases 32, 34, 37 and 38. Further, the central controller 40 enables the redemption center 36 to communicate with the distribution center 30 and the coupon issuer 22 in real time, and integrates and reconciles all information regarding particular coupon promotions from start to finish in a closed loop operation using data stored in the master database 38.

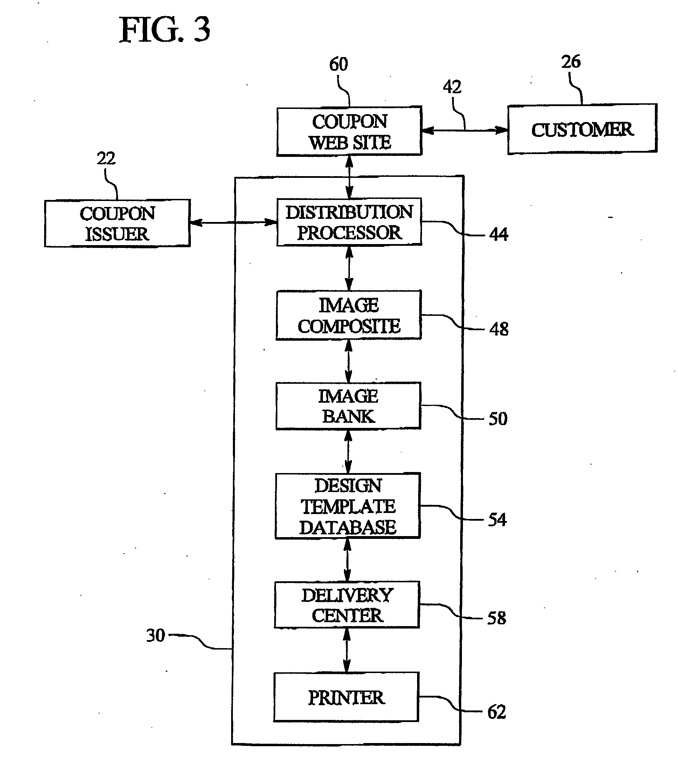

Turning now to FIG. 3, and in accordance with one preferred embodiment of the present invention, the customer 26 is connected to the coupon web site 60 via the Internet 42. In turn, the coupon web site 60 is in communication with the coupon distribution center 30. It should be appreciated, however, that communication between the coupon distribution center 30 and the customer 26, through the coupon web site 60, can be through suitable other electronic data network, such as an Intranet. The customer 26 can be connected to the Internet 42 via a personal computer, a cellular phone, PDA, or any other suitable electronic data network access device.

When the coupon issuer 22 commits to a promotional campaign that includes discount coupons, the necessary specifications including artwork, offer terms, release dates, etc., are relayed to a distribution processor 44 in the coupon distribution center 30. The distribution processor 44 runs a series of checks such as the correctness of the offer code, check-digit validity, readability of the bar code, and consistency of text and coded information. Most of these checks are performed automatically by suitable software routines, and a final visual integrity check is preferably made before the offer is formally released to the customer 26 through the coupon web site 60.

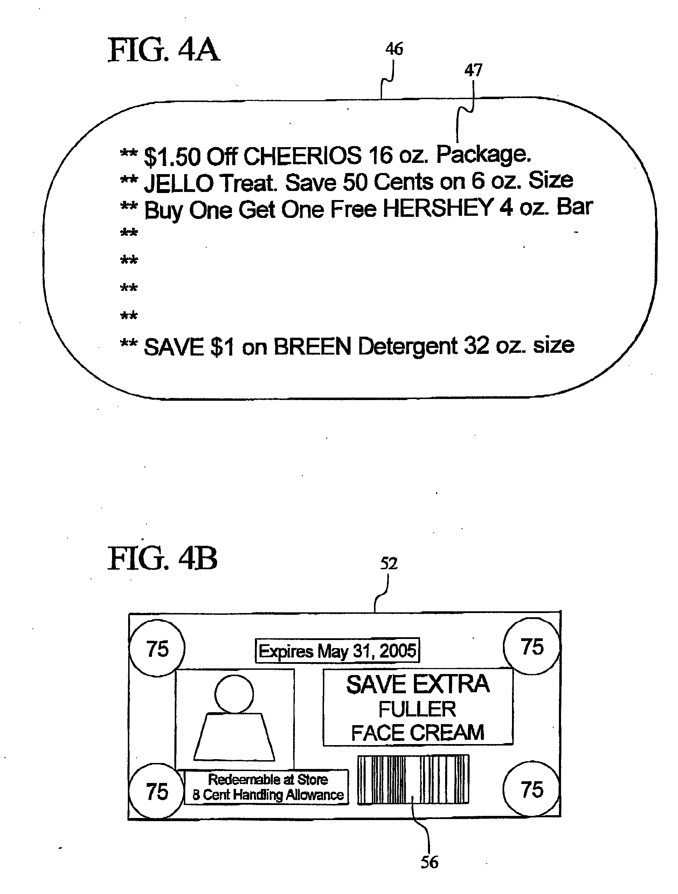

On release approval from the coupon issuer 22, the distribution processor 44 creates an Internet presentation 46 (See FIG. 4A) of the offer that is then added to the list of offers 47 currently available to the customer. Preferably, this presentation at this point in time is in text form only as shown in FIG. 4A, in order to avoid lengthy Internet download times, and user impatience that inevitably arise when graphics files are transferred. A one-line, text-only descriptor is used to highlight the offer. A viewer can learn more about the offer by highlighting a particular offer line and clicking to drill down if more information is needed. Preferably, this supplementary information is also strictly in text form to expedite user access. The distribution processor 44 by using an image compositor 48 to integrate the graphics and texts retrieved from an image bank 50 automatically produces artwork and copy originals as shown in FIG. 4B that subsequently serve as the master for reproducing the high quantities needed for distribution. The distribution processor 44 also creates a print master 52 (Fig. 4B), which substantially resembles the display 46, for producing the actual coupons. Previously composed Internet displays 46 and print masters 52 are preferably stored in a design template database 54 so that they are reusable without the need for regeneration.

An example of data elements included in the Internet display 46 or the print master 52 are illustrated in FIGS. 4A and 4B, respectively. Preferably, the print master 52 is composed with full graphic appeal, whereas in the Internet display 46, the offer specifics are presented, in concisive, eye-catching text terms. Most of the features of the Internet display 46 and the print master 52 are accessed from the image bank 50 (FIG.3) indexed by particular offer specifications. A coupon bar code 56, however, is generated for each new coupon and checked for internal validity and tested for possible ambiguity with offers previously released. At least one of the bar codes on the coupon may encode an identification of the customer or household who ordered the specific coupon, as discussed in more detail below.

The distribution processor 44 also downloads the print master 50 information to a delivery center 58, where the actual production, grouping and dispatching of the coupons selected by the customer 26 are handled. To accommodate many promotions or coupon offers for many different coupon issuers 22, the distribution processor 44 includes an automatic release scheduler keyed by the offer starting date, that automatically transfers required information to the coupon web site 60 via the Internet 42 and to the delivery center 58. This linkage is also used to immediately convey customer orders to the delivery center 58.

The distribution processor 44 manages one or more web sites 60 where the customer 26 can access available coupon offers. Such sites are equipped with user-friendly routines and are readily locatable through keywords, bookmarks and a facility for entry to a favored site list. Prior to shopping, the customer 26 would browse the web site 60 and select offers that have appeal. A first time user is required to enter basic registration information that will at least include an e-mail address. After coupon selection is made, the customer 26 is asked to chose the manner of coupon delivery which could be printed coupons, an electronic transmission that would facilitate printing within a particular store, or an electronic transfer across the Internet to a smart card. The coupon selection process is completed when the user enters an address (home, work or designated store) for dispatching the selected coupons. Customary security access procedures such as a password and PIN code are preferred to ensure the correctness of coupon issuance. Additional information may be requested relating to profiling issues such as demographic, socio-economic, lifestyle, etc. that may be used subsequently to target specific offers to particular consumers. On reception of a coupon order from the customer 26, via the coupon web site 60, the distribution processor 44 initiates the coupon production and distribution cycle. As illustrated in Fig. 2, after obtaining the coupons, the customer uses them to make the specified purchases and is awarded an instant discount by the acceptor 28. The acceptor submits the coupons to the coupon distribution and redemption center 24. The coupons are then handled by the redemption center 36 that has automated components for identifying the acceptor, scanning and manual data capture systems for capturing and validating coupon values and offer codes, and transaction processors that summarize the financial content and related marketing data as contained in the offer codes. The redemption center also has facilities for automatically uploading any relevant data to all ofthe databases 32, 34, 37 and 38.

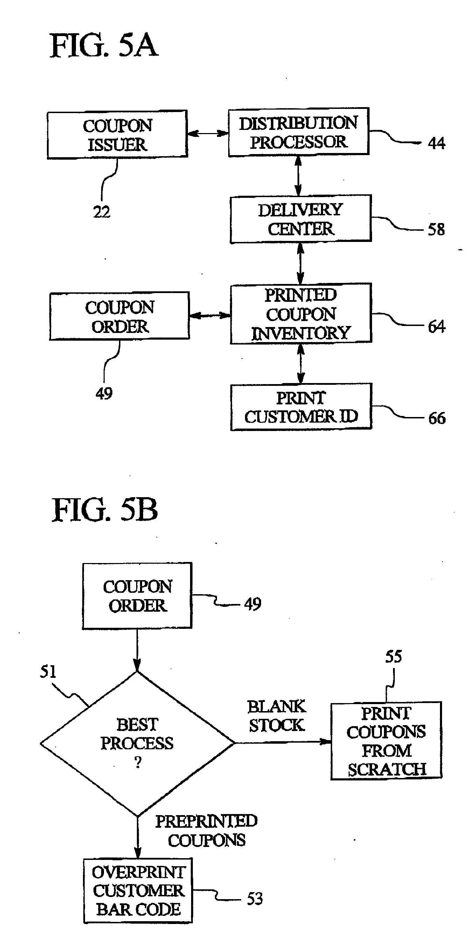

As seen in Fig. 3, in one embodiment of the present invention, coupons are printed at the coupon distribution center 30 prior to being offered to the customer 26. As illustrated in Fig. 5A, once the coupon offer has been finalized between the coupon issuer 22 and the distribution processor 44, a bulk printing order is placed with the delivery center 58 of the coupon distribution center 30 (best shown in FIG. 3). Such print runs are limited in volume and controlled depending upon the rate at which coupons are ordered 49 by the customer(s). Here, the coupons are printed preferably on a high quality, high-resolution printer 62 (best shown in FIG. 3) and added to a printed coupon inventory 64. The distribution and redemption control center 24 is then primed to deliver the coupons on demand by the customer 26. Also referring now to FIG. 5B, as a coupon order 49 is accepted, and is to be encoded with customer identity 66, the coupons composing the order are grouped and put through a secondary print run on a high speed black-ink press that adds the customer identification bar code 53. Alternatively, depending upon order size and process economy, customer identification coded coupons may be provided in an original print run 55 that produces the coupon in a single step from blank stock to finished item. This process is shown in FIG. 5B where the complexity of the customer order 49 is first reviewed to determine the best production process to apply as indicated by diamond 51. If the single print process is optimal, the coupon is produced on a single print run on blank stock. If the secondary print process is optimal, pre-printed coupons are withdrawn from inventory and customer bar codes added.

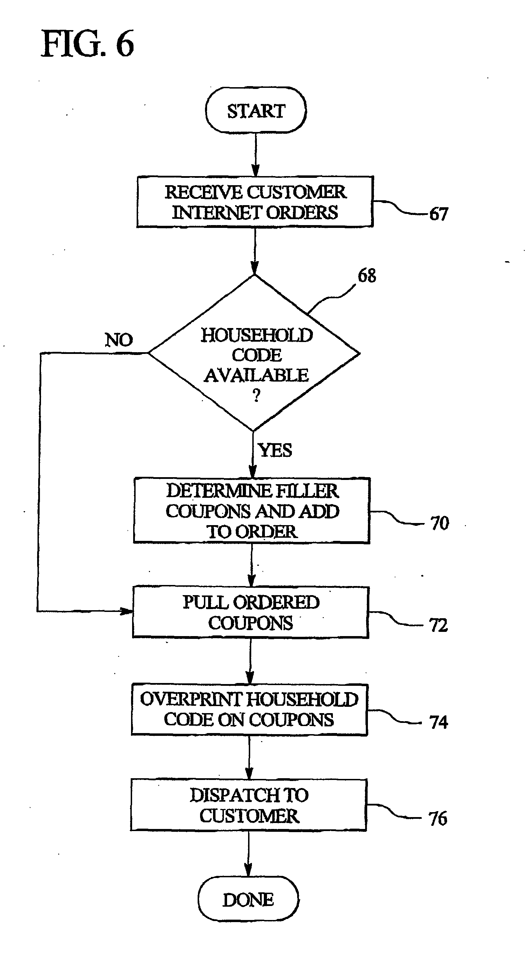

Referring now to FIG. 6, when the distribution processor receives a coupon order from the customer as indicated by block 67, it checks the customer database 34 (best shown in FIG. 2) to determine or freshly assign for a new user, the household code associated with the customer, as indicated by diamond 68. If there is sufficient profiling information linked to the household code, additional filler coupons 70 may be added to the coupon package since they should appeal to the customer. The household code serves as a database address to the customer profile that is created from the customer's prior coupon redemption activities. Then, the coupons ordered by the customer and the filler coupons are pulled from the printed coupon inventory 64 (best shown in Fig. 5A) as indicated by block 72. If the profile is insufficient to determine interests, only the coupons ordered by the customer are pulled. The coupons then go through an overprint process that encodes a household identification code on each coupon as indicated by block 74, prior to being dispatched to the customer as indicated by block 76.

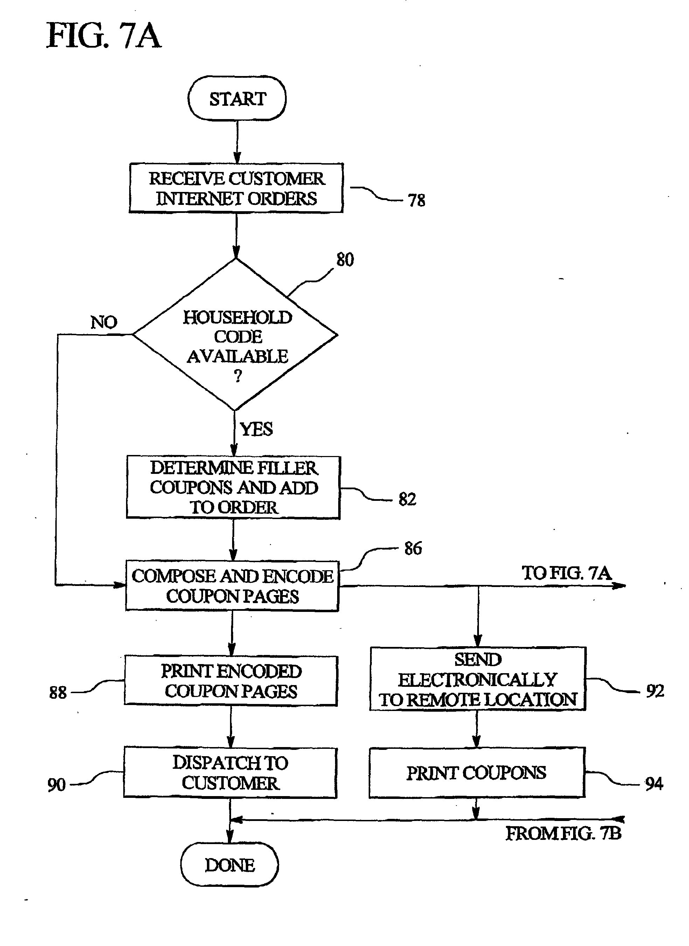

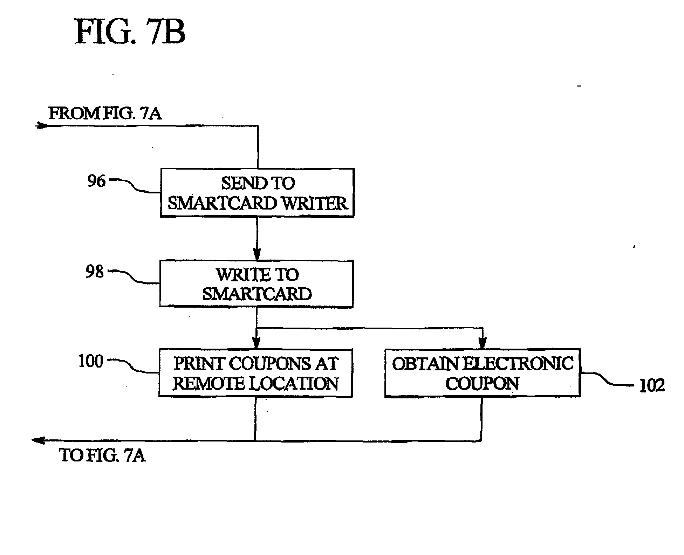

Turning now to FIG. 7A, and in accordance with one embodiment of the present invention, coupons are not pre-printed, but created in real-time upon the demand or order by the customer. In this embodiment (best shown in Fig. 3), after the distribution processor 44 has presented the coupon offer list to the customer 26 (via the coupon web site 60), it waits for the customer 26 to order one or more coupons. When the distribution processor 44 receives an order for coupons from the customer 26 (via the coupon web site 60) as indicated by block 78, it checks the customer database 34 (best shown in FIG. 2) for the profile linked to the household code, as indicated by diamond 80.

If the profile contains sufficient information, in one embodiment, additional filler coupons that may be of interest to the customer are determined and added to the ordered coupons as indicated by block 82. This process is not performed if there is insufficient profile information for the customer ordering the coupons. As described above, the household code provides direct linkage to the customer profile that is created from the customer's prior coupon redemption activities and any available demographic, socio-economic or other information captured when the customer registers.

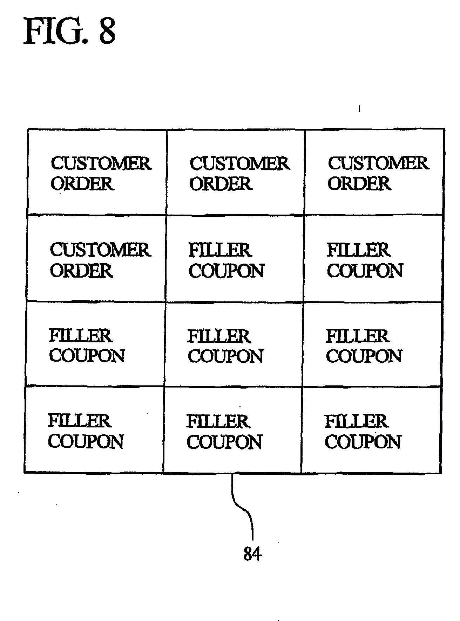

The ordered coupons along with the filler coupons are then composed on a coupon page 84 (an example of a coupon arrangement on the page 84 is shown in FIG. 8), and encoded with household codes as indicated by block 86. Preferably, the coupons are arranged on the coupon page 84 in order to optimize printing area lay out, printing efficiency and costs, and to maximize the esthetic appeal to the customer. The seams between coupons on the printed page (FIG. 8) are preferably perforated to permit easy separation. A typical coupon arrangement may facilitate the printing of 12 coupons of approximately 2.7 x 2.9 inches in size on regular 8.5 x 11 inch page. In one embodiment, the coupons are printed in a controlled environment on a high quality, high resolution printer such that each coupon issued is identical in size and appearance for a particular offer. In this manner, concerns as to the authenticity of the coupons when they are presented to the coupon acceptor 28 are reduced. Controlled print conditions also result in the coupons having highly scannable bar codes. The coupons may also incorporate antifraud measures such as two-sided printing with highlighted cautionary messages in color, high definition graphics, and even high-resolution symbol patterns to inhibit copying, for example. Such measures are expectedly not practical in the homo-printing environment.

In one embodiment of the present invention, the coupon page 84 is printed as indicated by block 88 and dispatched to the customer as indicated by block 90. The coupons can also be electronically transmitted directly through a landline using a modem or through wireless transmission such as pager or cellular link, to a remote location such as the preferred store as indicated by block 92. The coupons are then printed on demand, as indicated by block 94, as the customer makes a shopping trip and enters her coupon order number into the print terminal, for example.

Referring now to FIG-7B, and in accordance with another embodiment of the present invention, the ordered coupons, with or without filler coupons, are sent to the customer via the electronic data network such as the Internet or an intranet, to a device accessible to the customer, for example, a personal computer, with a smart card writing capability, as indicated by block 96. The coupons are then written onto the smart card (not shown), and the coupons are printed at a remote location such as a retail store, as indicated respectively by blocks 98 and 100. In another embodiment, after the smart card has been written with the coupons as indicated by block 98, it can be used as a direct electronic coupon, without ever being produced in print form, as long as the acceptor has a smart card terminal and the store POS system has been downloaded with promotion specifics 102 from the coupon distributor.

It should be understood that various changes and modifications to the presently preferred embodiments described herein would be apparent to those skilled in the art. Such changes and modifications can be made without departing from the spirit and scope of the present invention and without diminishing its intended advantages. It is therefore intended that such changes and modifications be covered by the appended claims.

## Claims

1. A system for distributing and redeeming a coupon which is ordered by a customer, said system comprising:
a coupon distribution center for distributing the coupon to the customer; and
a redemption center for redeeming the coupon distributed by the coupon distribution center, said redemption center operable to communicate with said coupon distribution center to receive from said coupon distribution center data associated with the coupon distributed by said coupon distribution center, and to transmit to said coupon distribution center data relating to the coupon redeemed by said redemption center.

2. The system of Claim 1, which includes a first database for storing information relating to the customer.

3. The system of Claim 2, wherein said first database stores data created from the customer's prior coupon redemption activities and initial registration.

4. The system of Claim 1, which includes a second database for storing information relating to a coupon issuer that issued the coupon.

5. The system of Claim 4, wherein said second database stores information including customer name and billing address, customer contact name and telephone number, MIN number, product family codes, and general terms and conditions for coupon offers.

6. The system of Claim 1, which includes a third database for storing the data associated with the coupon distributed by said coupon distribution center, and the data relating to the coupon redeemed by said redemption center.

7. The system of Claim 6, wherein said third database stores a history of prior coupon promotions, details of active promotions including product, face value, offer codes, volumes authorized for release, release and expiration dates, flags for special coupons and on-going redemption volumes by particular offer codes as redeemed at particular acceptors.

8. The system of Claim 6, which includes a controller for managing essential interactions between said coupon distribution center and said redemption center, generating data relating to the coupon from said data stored in said third database, and sending said generated data to a coupon issuer that issued the coupon via said coupon distribution center.

9. The system of Claim 1, which includes a fourth database for storing information relating to a coupon acceptor that accepted the coupon from the customer and sent the coupon to said redemption center.

10. The system of Claim 9, wherein said fourth database stores the coupon acceptor's accounts receivable accrued in connection with a discount given to the customer when the coupon was presented to the coupon acceptor by the customer.

11. The system of Claim 1, which includes a controller for enabling communication between said coupon distribution center and said redemption center in real time.

12. The system of Claim 1, wherein said distribution center includes a processor in communication with a coupon issuer that issued the coupon for creating a presentation screen of the coupon to be offered to the customer.

13. The system of Claim 12, where the presentation screen only includes text of coupon terms to minimize transmission times.

14. The system of Claim 12, wherein said processor creates original artwork and copy for the coupon using an image compositor for integrating graphics and texts for the coupon stored in an image database.

15. The system of Claim 13, wherein said processor creates a print master using said image compositor to print the coupon ordered by the customer.

16. The system of Claim 15, where the print master is multicolored and has a predefined definition and resolution.

17. The system of Claim 15, which includes a database for storing said coupon presentation screen and said print master created by said processor.

18. The system of Claim 12, wherein said coupon distribution center includes a delivery center in communication with said processor, and operable to dispatch the coupon to the customer responsive to instructions from said processor.

19. The system of Claim 18, wherein said processor is in communication with the customer, and sends the instructions to said delivery center to dispatch the coupon to the customer after the customer orders the coupon.

20. The system of Claim 19, wherein said delivery center pre-prints an inventory of coupons prior to receiving specific customer orders.

21. The system of Claim 20, whereupon receiving a specific customer order, the delivery center over prints appropriate inventory coupons with a bar code identifying the customer.

22. The system of Claim 19, wherein the coupon is originally printed on blank stock including the customer identification bar code.

23. The system of Claim 19, wherein said processor determines at least one supplementary coupon to be dispatched to the customer and instructs said delivery center to dispatch the supplementary coupon along with the coupon ordered by the customer.

24. The system of Claim 23, wherein said processor determines the supplemental coupon to be sent to the customer based on analysis of profile information relating to the customer which is stored in a database.

25. The system of Claim 23, wherein the ordered and supplemental coupons are overprinted with a bar code identifying the customer prior to dispatch.

26. The system of Claim 19, wherein said processor encodes the coupon with data relating to the customer when said processor receives the order for the coupon from the customer before the coupon is dispatched to the customer by said delivery center.

27. The system of Claim 19, wherein the coupon is printed after the coupon has been encoded with data identifying the customer by said processor, and the printed coupon is dispatched to the customer by said delivery center.

28. The system of Claim 19, wherein the coupon is transmitted electronically to the customer after the coupon is encoded with data identifying the customer.

29. The system of Claim 19, wherein said processor determines at least one supplemental coupon to be dispatched to the customer along with the coupon ordered by the customer based on data relating to the customer stored in a database, and encodes the supplemental coupon with data relating to the customer when said processor receives the order for the coupon and before the ordered coupon is dispatched to the customer.

30. The system of Claim 29, wherein the supplemental coupon and the coupon ordered by the customer are composed on a single coupon page.

31. The system of Claim 24, wherein the coupon is dispatched to the customer through a landline.

32. The system of Claim 24, wherein the coupon is dispatched to the customer via wireless transmission.

33. The system of Claim 24, wherein the coupon is dispatched to the customer via an electronic data network to a remote smart card writer, said smart card writing being operable to write the coupon onto a smart card.

34. The system of Claim 33, wherein the electronic data network is an Internet.

35. The system of Claim 19, wherein said processor communicates with the customer via an Internet.

36. The system of Claim 19, wherein said processor communicates with the coupon issuer via a direct data network or an Internet.

37. The system of Claim 1, wherein said redemption center receives the data associated with the distributed coupon from said coupon distribution center, and transmits the data relating to the coupons redeemed by said redemption center to said coupon distribution center in real time.

38. A system for distributing and redeeming coupons ordered by customers via an electronic data network, said system comprising:
a coupon distribution center in communication with the electronic data network for offering the coupons to the customers via the electronic data network, receiving coupon orders from the customers via the electronic data network, and sending the coupons to the customers; and
a redemption center for redeeming the coupons distributed by the coupon distribution center, said redemption center being in communication with said coupon distribution center for receiving from said coupon distribution center data associated with the coupons distributed by said coupon distribution center, and for transmitting to said coupon distribution center data relating to the coupons redeemed by said redemption center.

39. The system of Claim 38, which includes a database for storing information relating to the customers obtained from the customers via the electronic data network when the customers place orders for the coupons.

40. The system of Claim 38, which includes a controller for managing interface communication between said coupon distribution center and said redemption center and supporting components in real time.

41. The system of Claim 38, wherein said distribution center includes a processor linked with the customer via the electronic data network, and with at least one coupon issuer that issues the coupons for distribution by said distribution center.

42. The system of Claim 41, wherein said processor creates text presentation lists of offers in accordance with instructions from said coupon issuer and transmits them via a data network for presentation on a network access device used by the customer.

43. The system of Claim 41, wherein said processor automatically creates from stored graphics files, original artwork and copy masters for use in paper printing of coupons.

44. The system of Claim 42, wherein the textual offer lists are presented to the customers on an Internet web site.

45. The system of Claim 38, wherein the electronic data network is an Internet, and said coupon distribution center offers the coupons and receives the coupon orders via a web site on the Internet

46. The system of Claim 44, wherein the coupons are sent to the customers via the Internet to a remote smart card writer, said smart card writer operable to write the coupons onto a smart card.

47. The system of Claim 39, wherein said coupon distribution center is operatively connected to the customers via an Intranet.

48. A method for distributing and redeeming a coupon ordered by a customer, said method comprising the steps of:
(a) distributing the coupon issued by a coupon issuer to the customer from a distribution center;
(b) sending first data associated with the coupon distributed by said coupon distribution center to a redemption center;
redeeming the coupon distributed by the coupon distribution center when the coupon is presented for redemption; and
transmitting second data relating to the coupons redeemed by said redemption center to said coupon distribution center.

49. The method of Claim 48, which includes enabling communication between said coupon distribution center and said redemption center in real time.

50. The method of Claim 48, which includes generating third data relating to the coupon from said first and second data and transmitting the third data to the coupon issuer in real time.

51. The method of Claim 48, wherein the coupon is printed prior to receiving the order for the coupon from the customer, customized with bar code customer identification and dispatched to the customer after the order is received from the customer.

52. The method of Claim 51, which includes determining at least one supplemental coupon to be sent to the customer based on profiled characteristics of the customer, and dispatching the supplemental coupon to the customer along with the coupon ordered by the customer.

53. The method of Claim 52, which includes printing bar code symbols identifying the customer on the supplemental coupon and the coupon ordered by the customer prior to dispatching the coupons to the customer.

54. The method of Claim 48, which includes adding customer identification code to the coupon ordered by the customer when the order for the coupon is received from the customer and before the coupon is dispatched to the customer.

55. The method of Claim 48, which includes printing the coupon after the coupon has been encoded with a customer identification code and then dispatching the printed coupon to the customer.

56. The method of Claim 48, which includes transmitting the coupon electronically to the customer after the coupon has been encoded with a customer identification code.

57. The method of Claim 56, wherein the coupon is transmitted to the customer through a land- line.

58. The method of Claim 56, wherein the coupon is transmitted to the customer via wireless transmission.

59. The method of Claim 56, wherein the coupon is sent to the customer via an electronic data network to a remote smart card writer, said smart card writer operable to write the coupon onto a smart card.

60. The system of Claim 59, wherein the electronic data network is an Internet.

61. The method of Claim 56, which includes determining at least one supplemental coupon to be sent to the customer with the coupon ordered by the customer based on data specific to the customer, and encoding the supplemental coupon with bar coded customer identification before the supplemental coupon and the ordered coupons are dispatched to the customer.

62. The method of Claim 48, wherein the order for the coupon from the customer is received via an Internet.

63. A method for distributing and redeeming a coupon ordered by a customer via an electronic data network, said comprising the steps of:
(a) offering the coupon to the customer on an interactive site connected to the electronic data network;
(b) dispatching the coupon to the customer from a distribution center when the customer orders the coupon through the interactive site;
(c) sending first data associated with the coupon distributed by said coupon distribution center to a redemption center;
(d) redeeming the coupon distributed by the coupon distribution center when the coupon is presented for redemption;
(e) sending second data relating to the coupon redeemed by said redemption center to said coupon distribution center; and
(f) reconciling the distribution and redemption datum to close the financial transaction and extract promotion information relating to performance.

64. The method of Claim 63, wherein the offering includes a presentation list of currently available coupons only in text form.

65. The method of Claim 64, wherein the customer is offered a list of delivery methods for selecting a preferred delivery method.

66. The method of Claim 64, wherein the customer is offered an option of a paper or electronic coupon and an associated destination address.

67. The method of Claim 63, wherein the electronic data network is an Internet.

68. The method of Claim 63, where the first data and second data are sent in real time through a controller operatively connected to said coupon distribution center and said coupon redemption center.

69. A method for distributing and redeeming a coupon, said method comprising the steps of:
enabling a customer to select a coupon through an electronic data network by using a network access device operable to communicate with the electronic data network without downloading or printing the coupon through said network access device;
creating the coupon in paper form, said coupon encoded with an identification of the customer;
dispatching said coupon to the customer through a coupon distribution center;
sending first data associated with the coupon distributed by said coupon distribution center to a redemption center;
redeeming the coupon distributed by the coupon distribution center when the coupon is presented for redemption; and
transmitting second data relating to the coupon redeemed by said redemption center to said coupon distribution center.

70. A method for distributing and redeeming a coupon, said method comprising the steps of:
enabling a customer to select at least one of a plurality of coupons through an electronic data network by using a network access device operable to communicate with the electronic data network, wherein the coupon is displayed to the customer only in text form to facilitate rapid transmission of terms of the coupon to the customer through the network access device;
creating the coupon selected by the customer, wherein said coupon is encoded with an identification of the customer;
dispatching said selected coupon to the customer through a coupon distribution center;
sending first data associated with the coupon distributed by said coupon distribution center to a redemption center;
redeeming the coupon distributed by the coupon distribution center when the coupon is presented for redemption; and
transmitting second data relating to the coupon redeemed by said redemption center to said coupon distribution center.

71. A method for distributing and redeeming a coupon, said method comprising the steps of:
enabling a customer to select a coupon through an electronic data network by using a network access device operable to communicate with the electronic data network;
enabling the customer to select one of a plurality of forms of the coupon and one of a plurality of delivery methods for dispatching the coupon to the customer;
creating the coupon in the form selected by the customer, said coupon encoded with an identification of the customer;
dispatching said coupon to the customer using the delivery method selected by the customer through a coupon distribution center;
sending first data associated with the coupon distributed by said coupon distribution center to a redemption center;
redeeming the coupon distributed by the coupon distribution center when the coupon is presented for redemption; and
transmitting second data relating to the coupon redeemed by said redemption center to said coupon distribution center.

72. The method of Claim .71, wherein the forms of the coupon are paper or electronic forms.

73. The method of Claim 71, wherein the delivery methods include delivery to a home address, delivery to a business address, delivery to a designated coupon acceptor, delivery to a smart card writer, and delivery to an acceptor print terminal.
